# FASCICULE DE BREVET EUROPEEN

(11) **EP 1 525 242 B1**
(45) Date de publication et mention de la délivrance du brevet: **18.07.2007**
(21) Numéro de dépôt: 03750848.8
(22) Date de dépôt: 25.07.2003
(51) Int. Cl.: C08G 18/10, C08G 18/38, C09J 175/04

(54) **COMPOSITION ADHESIVE POUR MATERIAU HUMIDE**
KLEBSTOFFZUSAMMENSETZUNG FÜR FEUCHTE MATERIALIEN
ADHESIVE COMPOSITION FOR MOIST MATERIAL

(30) Priorité: 26.07.2002 FR 0209543
(43) Date de publication de la demande: 27.04.2005
(73) Titulaire: CENTRE NATIONAL DE LA RECHERCHE SCIENTIFIQUE (CNRS), 75016 Paris (FR)
(72) Inventeur: MORLIER, Pierre, F-33400 Talence (FR); DE JESO, Bernard, F-33370 Bonnetan (FR); DAUDE, Gérard, F-33140 Villenave D'Ornon (FR); DIMIER, Gérard, F-33400 Talence (FR)
(74) Mandataire: Colombet, Alain André
(86) Numéro de dépôt international: PCT/FR2003/002363
(87) Numéro de publication internationale: WO 2004/011520

(56) Documents cités:
- WO-A-92/13907
- US-A- 4 504 647
- US-A- 5 747 627
- US-A- 5 858 553
- DATABASE WPI Week 7703 Derwent Publications Ltd., London, GB; AN 1977-04941y XP002238049 & JP 51 140936 A (DAINIPPON INK & CHEM) 3 décembre 1976 (1976-12-03)

## Description

La présente demande concerne le domaine des adhésifs pour le collage des matériaux humides, en particulier le bois humide, notamment le bois vert.

Plus particulièrement, la présente invention se rapporte à une composition adhésive destinée au collage des matériaux humides. Elle se rapporte aussi au procédé de préparation de cette composition adhésive, et à son utilisation pour le collage des matériaux humides, en particulier le bois humide, notamment le bois vert.

Dans la présente invention, on entend par adhésifs, les colles, agents liants ou collants, destinés au collage des matériaux humides, entre eux ou sur un support, et sous toutes leurs formes, par exemple sous forme de plaques, de pièces et en général de morceaux de toutes formes et tailles.

Les matériaux qui contiennent une masse d'eau non négligeable sont souvent définis par le biais de leur teneur en humidité, qu'il convient de définir. On appelle teneur en humidité d'un matériau, la masse d'eau contenue dans le matériau, exprimée en pourcentage de sa masse anhydre.

Certains matériaux, qu'ils soient minéraux et/ou organiques, naturels, synthétiques ou artificiels, possèdent soit une humidité intrinsèque, soit une aptitude à absorber l'humidité. Ceci implique qu'avant de les coller, ces matériaux doivent être généralement séchés. L'industrie doit donc disposer de lieux qui permettent le stockage des matériaux à sécher impliquant des contraintes économiques, spatiales et temporelles.

La température et la durée de séchage varient considérablement selon le matériau à sécher. Dans les variétés de bois par exemple, le chêne est un matériau difficile à sécher tandis que l'épicéa ou le sapin présentent des tables de séchage beaucoup plus commodes. Cependant, on considère généralement que plusieurs mois à quelques années sont nécessaires selon le matériau et la saison. Des techniques et des cadences de séchage doivent donc être mises au point et planifiées en fonction du matériau à sécher. De surcroît, le séchage présente de nombreux inconvénients. Par exemple, le séchage à l'air libre, qui consiste à entreposer le matériau sur des baguettes, présente des risques de pourriture relatifs à la longue période pendant laquelle le matériau est humide. Le séchage artificiel quant à lui, nécessite de s'équiper en séchoirs et en systèmes de ventilation et d'humidification.

Toutes ces raisons, et bien d'autres encore, font que l'industrie cherche de plus en plus à diminuer, voire éliminer, le séchage des matériaux humides avant collage. La demanderesse a ainsi cherché une composition adhésive qui permette le collage de matériaux humides, notamment du bois vert, en vue d'obvier les inconvénients liés au stockage des matériaux et à l'organisation du séchage.

Le collage de matériaux est une problématique très ancienne qui suscite de nombreux intérêts. Entre autres, les adhésifs pour bois font l'objet de recherches constantes aux fins d'amélioration des propriétés adhésives. De nos jours, les colles à bois fonctionnent bien dans une gamme d'humidité du bois allant de 6 à 20%. Notamment, les colles résorcine-phénol-formol (RPF) et mélamine-urée-formol (MUF) possèdent des performances optimales dans l'intervalle d'humidité compris entre 9 et 14%.

Néanmoins, ces compositions de colle sont très peu usitées du fait même des problèmes de toxicité et d'écotoxicité qu'elles engendrent et de leur faible aptitude à coller le bois vert. La colle RPF, par exemple, présente une composante ammoniacale dont on connaît les méfaits sur l'environnement. Par ailleurs, les propriétés malodorantes du résorcinol s'ajoutent à celles précédemment citées. En outre, l'humidité contenue dans le bois vert rend le collage insuffisant voire impossible.

Aussi, on cherche de plus en plus à faire des compositions adhésives pour matériaux humides, et notamment pour bois vert, qui tendent à éliminer les risques pour l'environnement et qui ne présentent pas d'odeurs désagréables. La demande WO 92/13907 divulgue des compositions contenant un isocyanate encombré et un oxazolidine pouvant former des adhésifs « hot melt » avec l'humidité ambiante. Le brevet US 4 504 647 décrit des aldimines et des oxazolidines en tant qu'agents de réticulation pour polyisocyanates en présence d'eau ou d'humidité. Le brevet US 5 747 627 décrit des compositions comprenant un polyisocyanate, une oxazolidine, et un composé favorisant l'ouverture de ladite oxazolidine en présence d'humidité, et utiles pour la Préparation de revêtements ou d'adhésifs.

La demanderesse a ainsi cherché une composition adhésive qui s'affranchisse de tous les désagréments précédemment cités.

Un objectif de la présente invention est donc de fournir une composition adhésive pour le collage de matériaux humides, qui ne possède pas les inconvénients exposés ci-dessus.

Un autre objectif de l'invention est de fournir une composition adhésive pour le collage de matériaux humides, en particulier le bois vert, dont la teneur en humidité varie entre 15 et 200%.

L'invention a également comme objectif d'obvier les inconvénients liés au stockage des matériaux humides et à l'organisation du séchage avant collage.

L'invention a encore comme but de fournir une composition adhésive pour matériaux humides qui puisse être utilisée sans que cela engendre des méfaits sur l'environnement ou sur l'utilisateur.

Un autre but encore de la présente demande est de proposer une composition adhésive pour matériaux humides qui ne présente pas d'odeurs désagréables.

L'invention a pour autre objectif une composition adhésive pour matériaux humides qui présente une grande stabilité en pot.

Un objectif de l'invention est également de proposer une composition adhésive pour matériaux humides facile à appliquer et qui ne nécessite pas d'installation spécifique. D'autres buts encore pourront apparaître dans la description de l'invention qui suit.

Il a maintenant été découvert que la composition adhésive pour matériaux humides selon la présente invention permet d'atteindre tout ou partie des objectifs précités.

Selon un premier aspect, l'invention concerne une composition adhésive pour matériau humide, caractérisée en ce qu'elle comprend :
a) un composé (A) comportant au moins deux fonctions isocyanate ;
b) un composé (B) susceptible de réagir avec l'eau du matériau de façon à libérer des groupements réactifs avec les fonctions isocyanate du composé (A) ;
c) un composé (C) comportant au moins deux fonctions alcool.

Il a en effet été découvert de manière surprenante que cette composition, sous l'action des molécules d'eau contenues dans le matériau humide possède d'excellentes propriétés adhésives et conduit à l'adhésion matériau-matériau ou matériau-support.

Certains composés réagissent, en effet, spontanément avec les molécules d'eau. La simple mise en contact suffit pour qu'une réaction chimique s'opère entre les molécules d'eau et lesdits composés. De tels composés sont apparus comme très avantageux dans une composition adhésive destinée au collage des matériaux humides.

En effet, ils permettent de consommer l'eau du matériau à la surface du joint de colle rendant ainsi possible le collage des matériaux humides. Il advient alors que les étapes de séchage, toutes ou en partie, peuvent être considérablement réduites, voire éliminées.

Il est en outre apparu que de tels composés, après avoir réagi avec l'eau du matériau humide, pouvaient réagir également avec d'autres composants pour former une composition adhésive susceptible de maintenir ensemble, par adhérence durable, les matériaux en contact.

L'invention vise donc une composition adhésive qui comprend un composé (A), un composé (B) et un composé (C), tels que définis précédemment.

Plus spécifiquement, le composé (A) est un composé comportant au moins deux fonctions isocyanate et un squelette hydrocarboné en C₁-C₁₅, linéaire, ramifié ou cyclique, saturé ou partiellement ou totalement insaturé. Il peut en particulier s'agir d'un composé comportant au moins deux fonctions isocyanate et un squelette hydrocarboné en C₁-C₁₅ comprenant un ou plusieurs noyaux de nature aromatique.

Par "au moins deux fonctions isocyanate", on entend que les composés comportent deux fonctions isocyanate ou plus. Il s'agit notamment et de manière non limitative, de diisocyanates (deux fonctions isocyanate), de triisocyanates (trois fonctions isocyanate), de tétra-isocyanates (quatre fonctions isocyanate), de polyisocyanates (plus de quatre fonctions isocyanate). On préfère cependant les composés comportant 2, 3 ou 4 fonctions isocyanate, tout particulièrement 2 ou 3 fonctions isocyanate.

Par "squelette hydrocarboné", on entend une chaîne comportant des atomes de carbone et d'hydrogène et éventuellement interrompue par un ou plusieurs hétéroatomes (tels que oxygène, azote, soufre, silicium, ...) ou hétérogroupes (amine secondaire ou tertiaire par exemple). Le squelette hydrocarboné peut également être substitué par un ou plusieurs groupes choisis notamment parmi cycloalkyle, cycloalcényle, aryle, alkylaryle, arylalkyle, hétéroalkyle, halogène, alkoxy ou même substitué par un squelette hydrocarboné, tel que défini précédemment.

Les composés comportant au moins deux fonctions isocyanate visés par l'invention sont de préférence choisis parmi les composés détaillés ci après.

On peut citer en particulier comme composés aliphatiques linéaires les composés tel que l'hexaméthylènediisocyanate (HMDI), les triméthylhexaméthylènediiocyanates (TMDIs) par exemple le 2,2,4-triméthylhexaméthylènediisocyanate et le 2,4,4-triméthylhexaméthylènediisocyanate, et les undécane triisocyanates (UNTIs). On peut citer également les composés aliphatiques dont le squelette hydrocarboné est ramifié, par exemple le 2-méthylpentane diisocyanate.

On peut encore citer les composés dont au moins une fonction isocyanate est en position secondaire, notamment cycloaliphatique, tertiaire ou néopentylique, par exemple l'isophorone diisocyanate (IPDI), le norbomane diisocyanate (NBDI), le 1,3-bis(isocyanatométhyl)cyclohexane (XDI hydrogéné) ou le 4,4'-bis(isocyanatocyclohexyl)méthane (H₁₂MDI).

Les composés comportant au moins deux fonctions isocyanate selon l'invention peuvent également être de nature aromatique. II peut s'agir par exemple du 2,4- ou du 2,6-toluène diisocyanate (TDI), des diphénylméthane diisocyanates (MDIs), du 1,5-naphtalène diisocyanate (NDI) ou du p-phénylène diisocyanate (PPDI).

Les composés comportant au moins deux fonctions isocyanates visés par l'invention peuvent également résulter de la condensation de deux ou plusieurs composés isocyanates entre eux ou de la condensation de composés porteurs de fonctions isocyanate avec des composés porteurs d'autres fonctions réactives avec les fonctions isocyanate, comme par exemple des fonctions hydroxyle ou amine.

Le composé (A) peut bien entendu consister en un mélange de deux ou plusieurs composés porteurs d'au moins deux fonctions isocyanates. Par exemple, le composé (A) peut être un mélange de composés de nature aromatique, aliphatique ou cycloaliphatique comportant chacun au moins deux fonctions isocyanate.

Le choix du ou des composés (A) sera généralement guidé par leur degré de réactivité et leur viscosité. On préfère les composés porteurs d'au moins deux fonctions isocyanates possédant une réactivité adaptée, notamment vis-à-vis du composé (C), à une température comprise entre l'ambiante et environ 100°C, et dont la viscosité permet la préparation de compositions adhésives relativement fluides. Des mélanges de composés porteurs d'au moins deux fonctions isocyanates, en diverses proportions, peuvent ainsi avantageusement répondre à ces critères préférés. On pourra notamment utiliser, par exemple et de manière non limitative, le Desmodur® 2460 M (commercialisé par Bayer), constitué d'un mélange d'isomères 4,4'-diphénylméthane diisocyanate et 2,4'-diphénylméthane diisocyanate, ou encore le Suprasec® 2385 (commercialisé par Huntsman), constitué de diphénylméthanediisocyanate modifié à l'urétonimine.

L'invention vise une composition adhésive qui comprend en outre un composé (B) susceptible de réagir avec l'eau du matériau de façon à libérer des groupements réactifs notamment avec les fonctions isocyanate du composé (A).

Le composé (B) présente de nombreux avantages et en particulier le double avantage d'absorber les molécules d'eau du matériau humide et de participer à la réticulation de la composition adhésive.

Le choix du composé (B) selon l'invention se base donc en premier lieu sur la présence de fonctions susceptibles de réagir avec les molécules d'eau du matériau humide (désignées dans la suite de la description comme fonctions réactives) et en second lieu sur l'aptitude de ces fonctions à libérer des groupements réactifs convenables pour l'invention, c'est-à-dire aptes à réagir en particulier avec les fonctions isocyanate du composé (A). Ainsi, la conjonction de ces deux caractéristiques permet aux molécules d'eau d'être consommées, puis au composé (B), après réaction avec les molécules d'eau, présentes notamment dans le matériau humide, de participer activement à la réticulation de la composition adhésive.

D'une manière générale, les fonctions réactives qui remplissent ces conditions impliquent généralement la présence d'une liaison entre au moins un hétéroatome (tel qu'oxygène, azote, silicium, soufre, ...) et un autre hétéroatome identique ou différent ou un atome de carbone. Ainsi conviennent comme fonctions réactives du composé (B) de l'invention, les fonctions comportant au moins un hétéroatome et susceptibles de réagir avec l'eau du matériau humide. Ces fonctions réactives, identiques ou différentes sont, par exemple et de manière non limitative, choisies parmi les fonctions éther cyclique, amine cyclique, lactame, ester cyclique, orthoester, anhydride d'acyle, thioéther cyclique, pour ne citer que les plus connues.

S'il apparaît qu'une condition est essentielle pour que les fonctions réactives forment les groupements réactifs visés par l'invention (posséder un hétéroatome), aucune condition concernant les composés comportant de telles fonctions n'est particulièrement requise en règle générale. Les composés (B) peuvent donc être de tous types: monocycliques ou polycycliques, aromatiques, etc. Les composés (B) peuvent en outre être substitués par un ou plusieurs radicaux, tels que ceux décrits pour le composé (A). Plus particulièrement, les composés monocycliques, polycycliques et/ou aromatiques peuvent être substitués par exemple par un ou plusieurs groupes alkyle, alcényle et alcyne.

Parmi les composés (B) comportant de telles fonctions réactives, on peut citer plus particulièrement les composés comportant au moins deux des fonctions réactives telles que définies ci-dessus. Comme cela a été précisé plus haut, lesdites fonctions réactives, qui sont au nombre de deux ou plus, sont identiques ou différentes.

Avantageusement, les fonctions réactives du composé (B) sont comprises dans un radical cyclique. Ainsi, on préfère plus particulièrement les composés (B) qui comportent au moins un radical cyclique à 4, 5, 6 ou 7 chaînons comportant chacun au moins deux fonctions réactives, telles que définies ci-dessus. De manière avantageuse, ces composés comportent au moins un radical cyclique à 5 ou 6 chaînons. De manière plus avantageuse, ces composés comportent au moins un radical cyclique à 5 chaînons. Bien entendu, il peut s'agir de composés comportant un cycle ou plus.

Dans le cas où le composé comporte plusieurs cycles, ceux-ci peuvent être différents ou identiques, ces cycles pouvant avoir une ou plusieurs liaisons communes ou même être reliés par une chaîne hydrocarbonée telle que précédemment définie, par exemple éventuellement substituée ou ramifiée, insaturée, partiellement ou totalement saturée, éventuellement interrompue par un ou plusieurs hétéroatomes ou hétérogroupes.

Par hétéroatomes, on entend plus particulièrement les atomes d'oxygène, d'azote, de soufre et de phosphore, de préférence oxygène, azote et soufre. Par hétérogroupes, on entend des radicaux divalents, linéaires, ramifiés ou cycliques comportant au moins un hétéroatome tel que défini précédemment.

De manière plus avantageuse encore, on utilise comme composé (B) pour la composition adhésive selon l'invention, un composé comportant un ou plusieurs cycles, chacun à 5 chaînons, et comportant au moins deux des fonctions réactives, telles que définies ci-dessus. On peut citer tout particulièrement ceux qui, sous l'action de l'eau du matériau humide, forment des groupements réactifs de type alcool et/ou de type amine.

Un composé (B) tout particulièrement préféré comporte au moins un motif oxazolidine de formule (I): 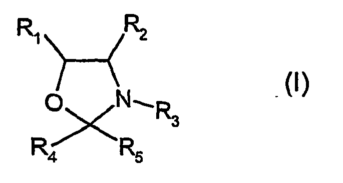 dans laquelle :
R₁, R₂, R₃, R₄ et R₅, identiques ou différents, sont choisis indépendamment les uns des autres parmi l'atome d'hydrogène et un radical carboné, linéaire, ramifié ou cyclique, saturé ou partiellement ou totalement insaturé et comportant de 1 à 10 atomes de carbone et éventuellement un ou plusieurs hétéroatomes ou hétérogroupes tels que définis précédemment, le radical hydrocarboné pouvant en outre être substitué par une ou plusieurs entités chimiques non réactives vis-à-vis des autres constituants de la composition adhésive ou bien par une ou plusieurs structures de formule (I).

On préfère encore les composés de formule (I) dans lesquels R₁ et R₂ représentent chacun l'hydrogène, R₃, R₄ et R₅ étant tels que définis précédemment.

À titre d'exemple, le composé (B) de formule (I) réagit avec les molécules d'eau du matériau humide selon le schéma suivant : 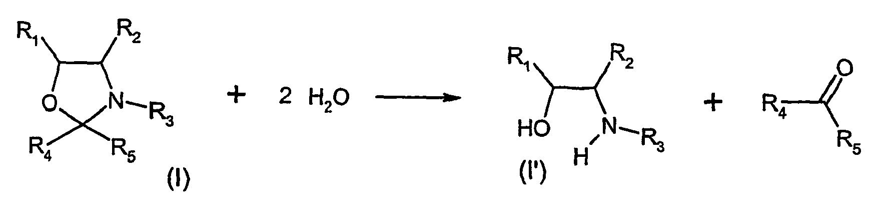 schéma dans lequel les radicaux R₁, R₂, R₃, R₄ et R₅ sont tels que définis précédemment et le composé de formule (I') représente l'entité réactive avec les autres composants, notamment le composé (A), de la composition adhésive selon la présente invention.

Selon un autre mode de réalisation de l'invention, le composé (B) est un composé de formule (II) comportant une ou plusieurs fonctions de type orthoester, qui réagissent avec les molécules d'eau selon le schéma suivant : 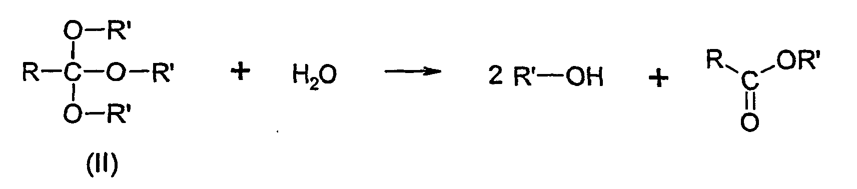 c'est-à-dire que les groupements orthoester sont aisément hydrolysés pour générer chacun deux fonctions hydroxyle et une fonction ester.

Dans les composés (II) du schéma réactionnel présenté ci-dessus, le radical R représente un atome d'hydrogène ou un radical R' ; le radical R' est un radical choisi parmi un radical carboné, linéaire, ramifié ou cyclique, saturé ou partiellement ou totalement insaturé et comportant de 1 à 10 atomes de carbone et éventuellement un ou plusieurs hétéroatomes ou hétérogroupes tels que définis précédemment, ce radical carboné pouvant en outre être substitué par une ou plusieurs entités chimiques non réactives vis-à-vis des autres constituants de la composition adhésive ou bien par une ou plusieurs structures de formule (II).

Dans les composés de formule (II), il doit être compris que les radicaux R' peuvent être identique ou différents. De préférence le radical R représente un atome d'hydrogène. Selon un autre aspect préféré de la présente invention, le composé (B) est un composé de formule (II). Lorsque le composé (B) est un composé de formule (II), celui-ci comporte de préférence au moins deux groupes orthoester, de préférence encore au moins trois groupes orthoester, et mieux encore au moins quatre groupes orthoester.

À titre d'exemple et sans limiter la présente invention à ce seul exemple, un composé (B) particulièrement préféré est un composé polyorthoester de type (11) tel que défini précédemment et répondant à la formule (II-A1) suivante : 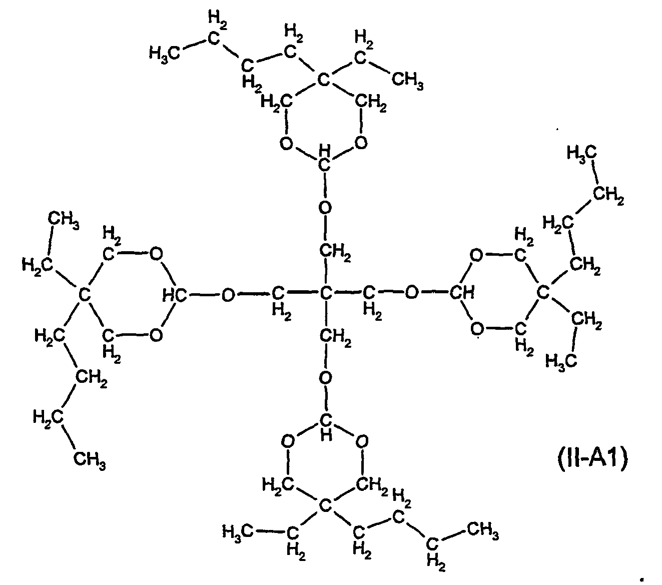 Le composé (II-A1) possède un indice d'hydroxyle l_{OH} de 337.

Les composés (B) sont, de manière générale, connus et disponibles dans le commerce, ou bien facilement synthétisables à partir de produits de départ commerciaux, selon des modes opératoires ou procédés connus du spécialiste de chimie organique, sur la base de ses connaissances, et de la littérature brevet et non-brevet, des Chemical abstracts ainsi que de données disponibles sur l'internet.

En particulier, le composé (B) peut être une oxazolidine ou une polyoxazolidine, commercialisées sous le nom HAERTER OZ® (commercialisé par Bayer), INZOCOL LV® ou encore INZOCOL 4® (commercialisé par Industrial Copolymer Ltd).

Il doit bien entendu être compris que la composition adhésive selon l'invention peut contenir plusieurs composés (B).

Dans la présente invention, les fonctions réactives telles que définies ci-dessus forment, après réaction avec les molécules d'eau notamment contenues dans le matériau humide, les groupements réactifs avec les fonctions isocyanate du composé (A). Ces groupements réactifs sont notamment de type hydroxyle, amine, thiohydroxyle, ... Par exemple, dans le cas d'une oxazolidine ou d'une polyoxazolidine, les groupements réactifs formés sont du type hydroxyle et amine. Le composé (II-A1) s'hydrolyse, notamment avec les molécules d'eau du matériau humide, en triols, diols et en aldéhyde-alcool.

Les groupements réactifs ou produits d'hydrolyse des composés (B) vont ensuite réagir avec les fonctions isocyanates du composé (A) et participer ainsi à la polycondensation et à la réticulation de la composition adhésive selon l'invention.

Par exemple, il s'agit de la réaction entre un groupement hydroxyle et un groupement isocyanate qui conduit à un groupement uréthanne :

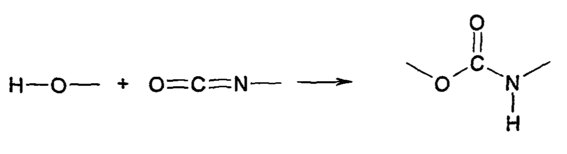

Il peut également s'agir de la réaction entre un groupement isocyanate et un groupement aminé qui conduit à un groupement urée :

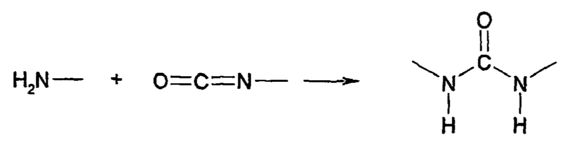

Avantageusement, la réaction du composé (B) avec les molécules d'eau du matériau humide, s'effectue à température ambiante, afin que les fonctions réactives conduisent aux groupements réactifs attendus. Toutefois, il n'est pas exclu que cette réaction se déroule à une température supérieure ou inférieure à la température ambiante, éventuellement en présence d'un catalyseur ou tout autre moyen permettant la formation des groupements réactifs attendus.

La composition adhésive comprend également un composé (C) comportant au moins deux fonctions hydroxyle. On entend ainsi que le composé (C) porte deux fonctions hydroxyle ou plus. Il s'agit notamment et de manière non limitative, d'alcools bifonctionnels ou diols (deux groupements hydroxyle), d'alcools trifonctionnels ou triols (trois groupements hydroxyle), d'alcools tétrafonctionnels ou tétraols (quatre groupements hydroxyle), d'alcools polyfonctionnels ou polyols (plus de quatre fonctions hydroxyle).

Les composés (C) de l'invention peuvent être de tous types. Il peut s'agir de composés linéaires ou cycliques à squelette hydrocarboné, ramifié ou non. Ces composés peuvent également être saturés ou partiellement ou totalement insaturés. Ces composés doivent cependant comporter deux fonctions hydroxyle ou plus.

Les fonctions hydroxyles peuvent être à une position quelconque le long de la chaîne hydrocarbonée. La chaîne ou les chaînes hydrocarbonées du composé (C) peuvent être interrompues par des hétéroatomes ou des hétérogroupes tels que définis précédemment.

Comme décrit ci-dessus, le composé (C) est un composé à squelette hydrocarboné éventuellement interrompu par un ou plusieurs hétéroatomes (tels que l'oxygène, l'azote, le soufre, le silicium...) ou hétérogroupes (amine secondaire ou tertiaire par exemple).

On préfère que le composé (C) soit de poids moléculaire relativement élevé, par exemple supérieur à 500 g.mol⁻¹, de préférence supérieur à 1000 g.mol⁻¹, avantageusement supérieur à 2000 g.mol⁻¹.

On préfère également que le composé (C) soit de type amphiphile, c'est-à-dire possède les caractéristiques d'être à la fois hydrophile et hydrophobe. En effet, ces deux caractéristiques sont particulièrement avantageuses en raison du caractère hydraté des matériaux humides à coller et du caractère organique des constituants de la composition adhésive. En effet, par son caractère hydrophile, le polyol fixe les molécules d'eau du matériau, tandis que, par son caractère hydrophobe, le polyol rend insoluble dans l'eau son produit de condensation avec le composé (A).

La composition adhésive selon la présente invention présente ainsi à la fois une grande homogénéité et une grande affinité pour le matériau humide destiné à être collé.

Ainsi, le composé (C) peut par exemple être choisi parmi les composés possédant au moins deux fonctions hydroxyle et comportant des unités oxyde d'éthylène (OE) et des unités oxyde de propylène (OP). Ces composés sont généralement caractérisés par leur rapport OE/OP, celui-ci étant, pour les besoins de la présente invention, avantageusement compris entre 10:1 et 1:10, de préférence entre 10:1 et 1:5, de manière encore plus avantageuse compris entre 5:1 et 1:5, par exemple 4:1.

En outre, le composé (C) est au moins bifonctionnel, de préférence au moins trifonctionnel, de manière plus avantageuse au moins tétrafonctionnel. On préfère les composés présentant 4 fonctions hydroxyle par mole.

Le composé (C) préféré de l'invention possède 4 fonctions hydroxyle et est de type copolymère oxyde d'éthylène/oxyde de propylène présentant un rapport OE/OP égal à 4:1.

Ce composé peut être par exemple représenté par la formule (III) suivante : 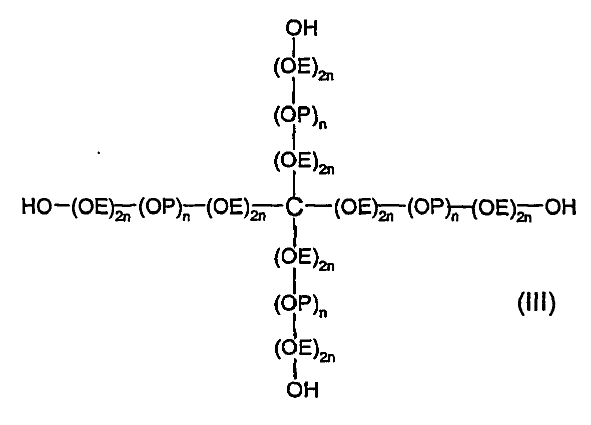 dans laquelle OE représente une unité oxyde d'éthylène (-O-CH₂-CH₂-) et OP représente une unité oxyde de propylène (-O-CH₂-CH₂-CH₂) et n représente un entier compris entre 1 et 100.

D'excellents résultats ont été obtenus avec des composés (C) répondant à la formule (III) et possédant une masse molaire comprise entre environ 2000 g.mol⁻¹ et environ 6000 g.mol⁻¹. Parmi ceux-ci, on peut citer tout particulièrement les alcools tétrafonctionnels commercialisés par Clariant sous la dénomination POLYGLYCOL P41200® et POLYGLYCOL P41300®.

On peut bien entendu utiliser un ou plusieurs composés (C) en mélange dans la composition adhésive selon l'invention. Il peut notamment être avantageux d'utiliser des mélanges, en proportions variables, de composés comportant au moins deux fonctions hydroxyle, possédant des viscosités et des caractères hydrophiles et/ou hydrophobes différents. En faisant varier les proportions des composés hydroxylés, il est ainsi possible d'ajuster la viscosité ainsi que les caractères hydrophile et hydrophobe du composé (C).

De manière préférée, la viscosité du composé (C) (c'est-à-dire un seul ou plusieurs composés comportant au moins deux fonctions hydroxyle) sera peu élevée afin d'améliorer la stabilité de la composition adhésive dans le temps et de permettre une meilleure pénétration de la composition adhésive dans le matériau à coller. Ainsi, des composés (C) possédant une viscosité comprise entre environ 50 cPs et 400 cPs ont donné des résultats tout à fait satisfaisants.

Les quantités respectives des composés (A), (B) et (C) dans la composition adhésive seront telles que le rapport du nombre de fonctions isocyanate par rapport au nombre de fonctions hydroxyle soit compris entre 1 et 10, de préférence entre 1,1 et 6. Avantageusement ce rapport est compris entre 1,5 et 5, par exemple environ 2 à 3.

Ainsi, selon un aspect préféré, la composition adhésive pour matériaux humides de l'invention comprend :
a) un composé (A) comportant au moins deux fonctions isocyanate ;
b) un composé (B) de formule (I) telle que définie précédemment ;
c) un composé (C) de formule (III) telle que définie précédemment ;
d) avec un rapport nombre de fonctions isocyanate/nombre de fonctions hydroxyle compris entre 1 et 10, de préférence entre 1,1 et 6, avantageusement compris entre 1,5 et 5, par exemple environ 2 à 3.

Selon un autre aspect préféré, la composition adhésive pour matériaux humides de l'invention comprend :
a) un composé (A) comportant au moins deux fonctions isocyanate ;
b) un composé (B) de formule (II) telle que définie précédemment ;
c) un composé (C) de formule (III) telle que définie précédemment ;
d) avec un rapport nombre de fonctions isocyanate/nombre de fonctions hydroxyle compris entre 1 et 10, de préférence entre 1,1 et 6, avantageusement compris entre 1,5 et 5, par exemple environ 2 à 3.

La composition adhésive selon l'invention peut éventuellement comprendre en outre un catalyseur masqué qui, sous l'action de l'eau, va accélérer la réaction de condensation des fonctions isocyanate en excès sur les fonctions hydroxyle. De tels catalyseurs sont connus en soi et peuvent par exemple être du type cétimine ou aldimine, libérant, sous l'action de l'eau, des fonctions amines permettant d'accélérer la prise de la colle.

Également, d'autres composés peuvent entrer dans la composition adhésive de l'invention tels que ceux classiquement utilisés et connus de l'homme du métier spécialiste des compositions adhésives. Ainsi, la composition peut comprendre, outre les composés (A), (B) et (C) définis précédemment, un ou plusieurs adjuvants choisis parmi les charges, liants et supports inertes, des pesticides (tels que herbicide, insecticide, nématocide, fongicide, anticryptogamique, bactéricide...), colorants ou pigments, des produits ignifuges, des stabilisants, conservateurs, anti-mottant, anti-gel, anti-mousse, épaississants, déviscosants, tensio-actifs, gélifiants, et en général tout type d'additif ne présentant pas d'interaction directe avec les composants adhésifs de la composition.

Il est cependant possible d'ajouter des charges hydrophiles participant également à la cohésion et à la prise de la composition adhésive. De telles charges hydrophiles peuvent être par exemple des protéines, notamment des protéines végétales, telles que protéines de soja et/ou de colza, qui ont été au préalable insolubilisées par traitement chimique. Lorsque de telles protéines végétales sont ajoutées à la composition adhésive selon l'invention, on obtient ainsi des colles hybrides naturelles et synthétiques présentant un intérêt sans cesse grandissant au regard de la protection de l'environnement.

Il a également été découvert que l'ajout d'un ou plusieurs agents d'allongement de chaîne permettait d'obtenir des compositions adhésives pour matériaux humides à propriétés améliorées, notamment du point de vue de la résistance au cisaillement du joint de colle. De tels composés peuvent être avantageusement choisis parmi les composés polyfonctionnels permettant les allongements de chaîne lors de la polymérisation de polymères, et tels qu'ils sont connus du spécialiste du domaine, tels que les dérivés de l'éthylène glycol par exemple de poids moléculaire inférieur ou égal à 400, ou les dérivés de résorcinol, par exemple les éthers de résorcinol. D'autres exemples d'agents d'allongement de chaîne ayant donné de bons résultats sont les trialkylène glycols.

La composition adhésive pour matériaux humides selon l'invention peut se présenter sous diverses formes, telles que par exemple liquides, plus ou moins visqueuses, pâtes, crèmes, gels mais aussi solides, comme par exemple les solides fusibles (hot melt). Les composés (A), (B) et (C), seuls ou en présence des adjuvants précités, peuvent être utilisés directement, à l'état de mélange, sous forme de composition adhésive monocomposant, prête à l'emploi. Les colles mono-composant ou multi-composants pour matériau humide comprenant une composition adhésive telle que définie précédemment avec les composés (A), (B), (C) pour application successive ou simultanée font également partie de la présente invention.

La composition peut également être sous forme concentrée à diluer avant emploi avec des solvants appropriés. Les composants (A), (B) et (C) peuvent en outre être appliqués séparément, de manière simultanée ou séquencée sur les surfaces à coller.

Il peut, en outre, être avantageux de réaliser un précondensat entre le composé (A) et le composé (C), le dit précondensat étant ensuite mélangé physiquement au composé (B) pour former une composition adhésive monocomposant pour matériaux humides.

Ainsi, un autre objet de la présente invention consiste à fournir un procédé de préparation de composition adhésive pour matériaux humides caractérisé en ce qu'il comprend les étapes de :
a) formation d'un précondensat entre le composé (A) et le composé (C) ;
b) mélange du précondensat au composé (B) ; et
c) éventuellement ajout d'un ou plusieurs adjuvants, charges, protéines et catalyseur masqué.

La formation du précondensat (prépolymère) peut être conduite à température ambiante. Elle peut également, le cas échéant, être effectuée à une température supérieure ou inférieure, par exemple à 80°C.

Cette réaction conduit, de manière classique, à la formation d'un prépolymère encore désigné comme précondensat. La durée et la température de mise en contact des composés, à l'étape (a), dépend de l'aptitude desdits composés à réagir entre eux et ainsi à former le prépolymère. Cette durée peut être inférieure à une heure, comprise entre une heure et trois heures. La durée de réaction peut également être supérieure à trois heures.

Dans une deuxième étape (b), on procède à l'ajout du composé (B). Cette étape peut, tout comme la première étape, se dérouler à température ambiante, de même qu'à une température supérieure ou inférieure à la température ambiante. Cette étape correspond à un mélange physique du composé (B) dans le précondensat obtenu à l'étape précédente.

L'invention concerne également l'utilisation de la composition adhésive pour le collage de matériaux humides.

De préférence, le matériau à coller est à base de bois possédant un taux d'humidité compris généralement entre 15 et 200%, bien que des taux supérieurs ou inférieurs conviennent également. Le bois vert, dans le contexte de la présente invention, doit être compris comme étant du bois provenant d'arbres ou d'arbustes abattus, et possédant un taux d'humidité compris entre 15% et 200%. La composition adhésive selon la présente invention peut être facilement utilisée sur tout type d'essence de bois. Il peut s'agir, par exemple et de manière non limitative, de hêtre, de chêne, de peuplier, de frêne, de bouleau, d'arbres fruitiers (par exemple poirier, noyer, cerisier, châtaignier), de pin, de sapin, d'épicéa et également de bois exotiques comme l'okoumé, le teck, l'ébène, l'acajou, le palissandre, etc.

Toutes ces essences interviennent notamment comme matières premières dans l'industrie du bois-matériau pour la fabrication de pièces, de meubles, pour la construction, etc. Dans un premier temps, le bois est généralement scié en lamelles ou planches de longueurs variables. La préparation du bois nécessite ensuite plusieurs opérations dont la première, le séchage, consiste à amener l'humidité du bois approvisionné à celle requise pour la fabrication. Le bois est ainsi amené à une siccité d'environ 12-15% en vue de la deuxième opération qui consiste en l'aboutage conventionnel. Au cours de cette opération dite "de purge", le bois est tronçonné et abouté, afin de réaliser les longueurs nécessaires à la fabrication. S'ensuivent les opérations de rabotage, d'encollage et d'assemblage sous presse.

L'utilisation de la composition adhésive selon l'invention pour le collage du bois présente de nombreux intérêts. Notamment, l'utilisation d'une telle composition entraîne une économie sérieuse sur la quantité de bois à sécher. De plus, elle permet de s'affranchir des inconvénients liés aux techniques et aux cadences de séchage. Enfin, elle permet de scier le bois en dimension d'emploi, de le purger vert et de l'abouter vert.

Les industries de la palette, de la cagette ou de tout autre type d'assemblage durable ou jetable, qui assemblent le bois vert, voient également dans l'utilisation d'une telle composition adhésive de nombreux avantages, et en particulier l'abandon de clous et agrafes, bien souvent synonymes de surcoûts, pertes de temps et blessures éventuelles pour les usagers.

En outre, la composition adhésive selon l'invention permet d'abouter du bois vert et fournit ainsi aux scieurs une valorisation de leurs chutes de sciage. En effet, toutes ces chutes de bois vert peuvent être assemblées par aboutage-collage en sortie de scierie puis débitées en longueurs variables pour reconstituer, par exemple, des planches à palette.

L'encollage des matériaux humides selon la présente invention est réalisé de manière classique et connue en soi.

On peut ainsi réaliser l'encollage par enduction ou pulvérisation de l'une ou des deux faces à encoller. L'encollage peut également être effectué par trempage ou immersion du matériau à coller. On peut encore déposer à froid ou à chaud, à l'aide d'un pistolet ou autre matériel approprié, un jonc, un ruban ou des gouttes (de tailles diverses, par points, sérigraphie, etc.) de la composition adhésive sur le matériau à coller.

Les matériaux humides ainsi encollés sont ensuite avantageusement pressés et maintenus dans cet état pendant des durées variables de quelques minutes à plusieurs heures et à température ambiante ou supérieure à l'ambiante, selon le degré d'efficacité et la résistance du collage souhaités.

Selon un autre aspect, l'invention a pour objet un article comprenant des pièces de matériaux assemblées entre elles, à l'état humide, par collage, à l'aide de la composition adhésive selon l'invention.

De manière préférée, ledit matériau est du bois vert. Il peut s'agir également d'un matériau à base de bois vert. Ce matériau peut être constitué d'une pluralité de couches planes de bois et/ou d'une pluralité de particules de bois liées les unes aux autres par ladite composition adhésive.

Les couches de bois peuvent notamment se trouver sous forme de poutres, de planches, de linteaux, de lambris, de carrelets, de coursons, etc.

Les particules susceptibles de constituer les matériaux en bois aggloméré selon l'invention sont de type connu en soi. Il peut s'agir notamment de fibres, d'écailles, de lamelles, de paillettes, de copeaux, de planures, de rabotures, de bandes de longueurs les plus diverses.

Les matériaux à base de bois vert collés selon l'invention peuvent être de tout type et notamment des matériaux à base de bois aggloméré, contreplaqué, laminé, plaqué, massif, massif reconstitué, structural abouté et lamellé collé.

Les matériaux à base de bois contreplaqué, aggloméré, laminé, plaqué peuvent être composites, c'est-à-dire comporter une ou plusieurs couches de bois, de papier, de film plastique, etc., venant s'intercaler entre les couches ou copeaux de bois, ou bien comporter sur une des faces ou les deux faces une couche bois plein ou aggloméré, décorative ou non ou encore du papier.

On peut ainsi réaliser par collage de bois vert, des cagettes, palettes, cageots, etc.... mais aussi tout type d'article en bois pour l'habitat, et notamment sols, lambris, planchers, rambardes et balustrades de balcon, vérandas, charpentes, etc....

Les exemples suivants illustrent l'invention sans toutefois en limiter la portée.

### Exemple 1

### Préparation d'une composition adhésive selon l'invention avec un composé (B) de type dioxazolidine

La préparation de la colle se déroule dans un réacteur muni d'un agitateur, d'une ampoule à brome et d'une arrivée de gaz inerte. À 237,5 g de Desmodur® 2460 M (soit 1,9 équivalents en isocyanate), on ajoute 125 g de POLYGLYCOL P41300® (soit 0,1 équivalent en hydroxyle). La viscosité du prépolymère augmente peu à peu. La température est portée à 80°C pendant 2 heures. On introduit alors 50 g (0,1 équivalent hydroxyle) de polypropylène glycol ARCOL® 1000N (commercialisé par Bayer) afin d'augmenter le caractère hydrophobe du mélange. On laisse à nouveau pendant 2 heures à 80°C. On ajoute enfin 97,8 g d'une dioxazolidine de type HAERTER OZ® (0,8 équivalents OH/NH).
Le mélange final est légèrement coloré en jaune pâle et peut être directement utilisé comme composition adhésive pour matériaux humides.

### Exemple 2

### Préparation d'une composition adhésive selon l'invention avec un composé (B) de type dioxazolidine

On réalise une colle à bois comme décrit dans l'exemple 1 en remplaçant la dioxazolidine par un mélange de 24,45 g d'une dioxazolidine de type HAERTER OZ® (0,2 OH/NH) et de 54 g d'INZOCOL LV® (0,6 OH).
Le mélange final est légèrement coloré en jaune pâle.

### Exemple 3

### Préparation d'une composition adhésive selon l'invention avec un composé (B) de type dioxazolidine

On réalise une colle à bois comme décrit dans l'exemple 1 en remplaçant la dioxazolidine par un mélange de 24,45 g d'une dioxazolidine de type HAERTER OZ® (0,2 OH/NH) et de 75 g d'INZOCOL 4® (0,6 OH).
Le mélange final est légèrement coloré en jaune pâle.

### Exemple 4

### Tests de traction-cisaillement

Les compositions adhésives de l'invention peuvent être évaluées par un test de traction-cisaillement, en fonction de la température et du temps de prise, c'est-à-dire du délai nécessaire pour que le collage atteigne une résistance suffisante pour résister aux contraintes mécaniques désirées.
À l'aide d'une encolleuse, on dépose environ 250 g/m² sur chaque face de deux planches en Pin Maritime dont la teneur en humidité avoisine 120%. On presse ensuite les deux planches pendant une heure, à une pression de 5 kg/cm².
Un test de traction-cisaillement est réalisé sur une éprouvette à simple recouvrement. Les résistances à la rupture sont représentées dans le tableau (I) suivant :

**-- Tableau (I) --**

| | Collage réalisé à 20°C | Collage réalisé pendant 1 heure à 20°C puis 24 heures à 50°C |
|---|---|---|
| Composition de l'exemple 1 | 2 MPa | 7 MPa |
| Composition de l'exemple 2 | 1,3 MPa | 1,9 MPa |
| Composition de l'exemple 3 | 2,3 MPa | 4,6 MPa |

### Exemple 5

### Préparation d'une composition adhésive selon l'invention avec un composé (B) de type polyorthoester

La préparation de la colle se déroule dans un réacteur muni d'un agitateur, d'un ampoule à brome et d'une arrivée de gaz inerte. À 258,4 g de Suprasec® 2385 (soit 1,9 équivalents en isocyanate), on ajoute 125 g de Polyglycol P 41300® (soit 0,1 équivalent en hydroxyle). La viscosité du prépolymère augmente peu à peu. La température est portée à 80°C pendant 2 heures 15 minutes. On introduit alors 50 g 0,1 équivalent hydroxyle) de propylène glycol ARCOL® 1000N (commercialisé par Bayer) afin d'augmenter le caractère hydrophobe du mélange. On laisse à nouveau pendant 2 heures à 80°C. On ajoute enfin 118,8 g du polyorthoester (II-A1) (0,8 équivalent OH).
Le mélange final est légèrement coloré en jaune pâle et peut être directement utilisé comme composition adhésive pour matériaux humides.

### Exemple 6

### Préparation d'une composition adhésive selon l'invention avec un composé (B) de type polyorthoester

Cette composition adhésive est préparée selon un procédé similaire à celui décrit dans l'exemple 5, dans laquelle ont été ajoutés 0,5% en poids de triéthanolamine.

### Exemple 7

### Tests de résistance au cisaillement du joint de colle

Les compositions adhésives des exemples 5 et 6 sont soumises à un test de résistance au cisaillement. Le test est réalisé sur trois échantillons de bois de pin maritime vert, d'humidité respective 22%, 45% et 69%. Le grammage de colle déposée est de 250 g/m² sur une face. L'ensemble est mis sous presse durant 30 minutes avec une pression de serrage de 0,5 MPa.
Le test de cisaillement en compression est réalisé sur des éprouvettes de dimensions 45 x 45 x 20 mm.

Les résultats de résistance au cisaillement (RS) sont présentés dans le tableau (11) suivant :

**-- Tableau (II) --**

| ***RS (MPa)*** | ***Humidité (%)*** | | |
|---|---|---|---|
| | ***22*** | ***45*** | **69** |
| ***Composition de l'exemple 5*** | 0,4 | 0,7 | 3,9 |
| ***Composition de l'exemple 6*** | 4 | 2,5 | 3,3 |

### Exemple 8

### Préparation d'une composition adhésive selon l'invention avec un agent d'allongement de chaîne

La préparation de la colle se déroule dans un réacteur muni d'un agitateur, d'une ampoule à brome et d'une arrivée de gaz inerte. À 237,5 g de Desmodur® 2460 M (soit 1,9 équivalents en isocyanate), on ajoute 31,25 g de POLYGLYCOL P41300® (soit 0,025 équivalent en hydroxyle). La viscosité du prépolymère augmente peu à peu. La température est portée à 80°C pendant 2 heures. On introduit alors 50 g (0,1 équivalent hydroxyle) de polypropylène glycol ARCOL® 1000N (commercialisé par Bayer) afin d'augmenter le caractère hydrophobe du mélange. On laisse à nouveau pendant 2 heures à 80°C. On introduit 20,62 g (0,275 équivalent hydroxyle) de triéthylène glycol comme agent d'allongement de chaîne, pendant 15 minutes. On condense à 75-78°C pendant 2 heures. On ajoute enfin 97,8 g d'une dioxazolidine de type HAERTER OZ® (0,8 équivalents OH/NH).
Le mélange final est légèrement coloré en jaune pâle et peut être directement utilisé comme composition adhésive pour matériaux humides.

### Exemple 9

### Comparaison du pouvoir adhésif d'une colle avec ou sans agent d'allongement de chaîne

Les compositions adhésives des exemples 1 et 8 sont soumises à un test de résistance au cisaillement du joint de colle. Le test est réalisé sur quatre échantillons de bois de pin maritime vert, d'humidité respective 20%, 33%, 41 % et 72%. Le grammage de colle déposée est de 250 g/m² sur une face. L'ensemble est mis sous presse durant 30 minutes avec une pression de serrage de 0,5 MPa.
Le test de cisaillement en compression est réalisé sur des éprouvettes de dimensions 45 x 45 x 20 mm.

Les résultats de résistance au cisaillement (RS) sont présentés dans le tableau (III) suivant :

**-- Tableau (III) --**

| ***RS (MPa)*** | ***Humidité (%*)** | | | |
|---|---|---|---|---|
| | ***20*** | ***33*** | ***41*** | ***72*** |
| ***Composition de l'exemple 1*** | 0,56 | - | 1,09 | 1,39 |
| ***Composition de l'exemple 8*** | 7,81 | 6,38 | 8,29 | 7,35 |

Les résultats ci-dessus démontrent clairement l'importance d'un agent allongeur de chaîne.

## Revendications

1. Composition adhésive pour matériau humide, **caractérisée en ce qu'**elle comprend :
a) un composé (A) comportant au moins deux fonctions isocyanate ;
b) un composé (B) susceptible de réagir avec l'eau du matériau de façon à libérer des groupements réactifs avec les fonctions isocyanate du composé (A);
c) un composé (C) amphiphile, comportant quatre fonctions alcool, et de type copolymère oxyde d'éthylène/oxyde de propylène.

2. Composition selon la revendication 1, **caractérisée en ce que** le composé (A) comporte au moins deux fonctions isocyanate, de préférence 2 fonctions isocyanate, et un squelette hydrocarboné en C₁-C₁₅, linéaire, ramifié ou cyclique, saturé ou partiellement ou totalement insaturé.

3. Composition selon la revendication 1 ou la revendication 2, **caractérisée en ce que** le composé (B) est suceptible de libérer au moins deux groupements réactifs avec les fonctions isocyanate du composé (A), en présence des molécules d'eau comprises dans le matériau humide.

4. Composition selon la revendication 3, **caractérisée en ce que** lesdits groupements réactifs libérés par le composé (B) sont choisis parmi les groupes hydroxyle et amine.

5. Composition selon la revendication 3 ou la revendication 4, **caractérisée en ce que** le composé (B) comporte au moins un radical cyclique à 4, 5, 6 ou 7 chaînons.

6. Composition selon l'une quelconque des revendications précédentes, **caractérisée en ce que** le composé (B) comporte au moins un motif oxazolidine de formule (I) : 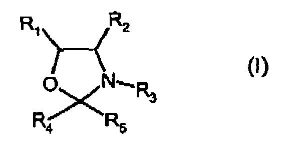 dans laquelle:
R₁, R₂, R₃, R₄ et R₅, identiques ou différents, sont choisis indépendamment les uns des autres parmi l'atome d'hydrogène et un radical carboné, linéaire, ramifié ou cyclique, saturé ou partiellement ou totalement insaturé et comportant de 1 à 10 atomes de carbone et éventuellement un ou plusieurs hétéroatomes ou hétérogroupes tels que définis précédemment, le radical hydrocarboné pouvant en outre être substitué par une ou plusieurs entités chimiques non réactives vis-à-vis des autres constituants de la composition adhésive ou bien par une ou plusieurs structures de formule (I).

7. Composition selon la revendication 6, **caractérisée en ce que** le composé (B) comporte au moins un motif oxazolidine de formule (I) dans laquelle R₁ et R₂ représentent chacun l'hydrogène.

8. Composition selon l'une quelconque des revendications 1 à 5, **caractérisée en ce que** le composé (B) comporte au moins une fonction orthoester de formule (II) : 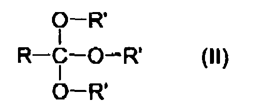 dans laquelle:
R représente un atome d'hydrogène ou un radical R' ; le radical R' est un radical choisi parmi un radical carboné, linéaire, ramifié ou cyclique, saturé ou partiellement ou totalement insaturé et comportant de 1 à 10 atomes de carbone et éventuellement un ou plusieurs hétéroatomes ou hétérogroupes tels que définis précédemment, ce radical carboné pouvant en outre être substitué par une ou plusieurs entités chimiques non réactives vis-à-vis des autres constituants de la composition adhésive ou bien par une ou plusieurs structures de formule (II).

9. Composition selon la revendication 8, **caractérisée en ce que** le composé (B) comporte au moins deux groupes orthoester, de préférence encore au moins trois groupes orthoester, et mieux encore au moins quatre groupes orthoester de formule (II) et R représente l'hydrogène,

10. Composition selon l'une des revendications précédentes, **caractérisée en ce que** le composé (C) possède un poids moléculaire supérieur à 500 g.mol⁻¹, de préférence supérieur à 1000 g.mol⁻¹, avantageusement supérieur à 2000 g.mol⁻¹.

11. Composition selon l'une des revendications précédentes, **caractérisée en ce que** le composé (C) répond à la formule (III) suivante : 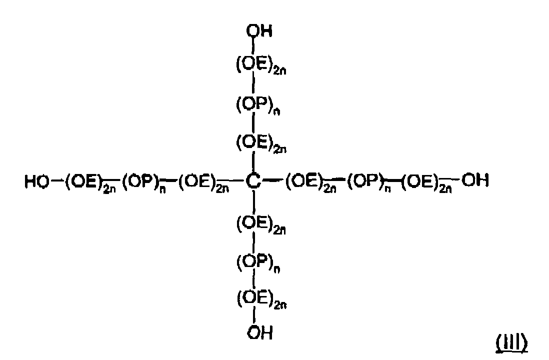 dans laquelle OE représente une unité oxyde d'éthylène (-O-CH₂-CH2-) et OP représente une unité oxyde de propylène (-O-CH₂-CH₂-CH₂) et n représente un entier compris entre 1 et 100.

12. Composition selon l'une quelconque des revendications précédentes, **caractérisée en ce que** le rapport fonctions isocyanate/fonctions alcool de la composition est compris entre 1 et 10, de préférence entre 1,1 et 6, avantageusement entre 1,5 et 5, entre environ 2 et 3.

13. Composition selon l'une quelconque des revendications précédentes, **caractérisée en ce qu'**elle comprend :
a) un composé (A) comportant au moins deux fonctions isocyanate ;
b) un composé (B) comportant au moins un motif oxazolidine de formule (I) : 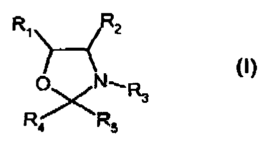 dans laquelle :
R₁, R₂, R₃, R₄ et R₅, identiques ou différents, sont choisis indépendamment les uns des autres parmi l'atome d'hydrogène et un radical carboné, linéaire, ramifié ou cyclique, saturé ou partiellement ou totalement insaturé et comportant de 1 à 10 atomes de carbone et éventuellement un ou plusieurs hétéroatomes ou hétérogroupes tels que définis précédemment, le radical hydrocarboné pouvant en outre être substitué par une ou plusieurs entités chimiques non réactives vis-à-vis des autres constituants de la composition adhésive ou bien par une ou plusieurs structures de formule (I) ; et
c) un composé (C) répondant à la formule (III) suivante : 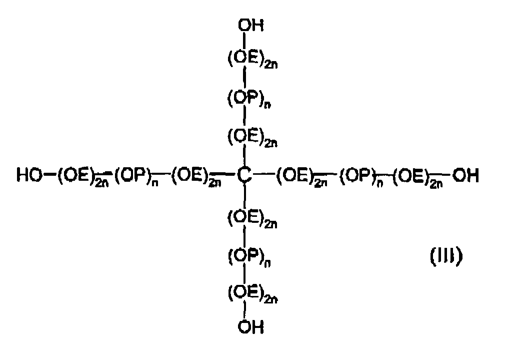
dans laquelle OE représente une unité oxyde d'éthylène (-O-CH₂-CH₂-) et OP représente une unité oxyde de propylène (-O-CH₂-CH₂-CH₂) et n représente un entier compris entre 1 et 100 ;
le rapport fonctions isocyanate/fonctions alcool de la composition étant compris entre 1 et 10, de préférence entre 1,1 et 6, avantageusement entre 1,5 et 5, entre environ 2 et 3.

14. Composition selon l'une quelconque des revendications 1 à 12, **caractérisée en ce qu'**elle comprend :
a) un composé (A) comportant au moins deux fonctions isocyanate ;
b) un composé (B) comportant au moins une fonction orthoester de formule (II-A1): 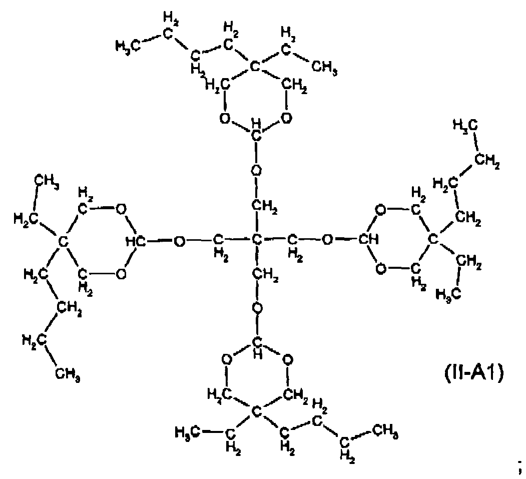 et
c) un composé (C) répondant à la formule (III) suivante : 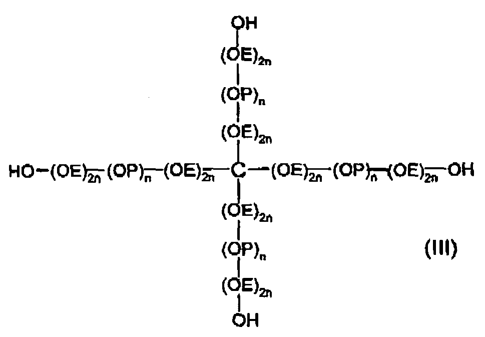
dans laquelle OE représente une unité oxyde d'éthylène (-O-CH₂-CH₂-) et OP représente une unité oxyde de propylène (-O-CH₂-CH₂-CH₂) et n représente un entier compris entre 1 et 100 ;
le rapport fonctions isocyanate/fonctions alcool de la composition étant compris entre 1 et 10, de préférence entre 1,1 et 6, avantageusement entre 1,5 et 5, entre environ 2 et 3.

15. Composition selon l'une quelconque des revendications précédentes, **caractérisée en ce qu'**elle contient en outre un agent d'allongement de chaîne.

16. Composition selon l'une quelconque des revendications précédentes, **caractérisée en ce qu'**elle contient en outre un catalyseur masqué.

17. Procédé de préparation d'une composition adhésive pour matériau humide, selon l'une quelconque des revendications 1 à 16, **caractérisé en ce qu'**il comprend :
a) la formation d'un précondensat entre le composé (A) et le composé (C);
b) mélange du composé (B) au précondensat ; et
c) éventuellement ajout d'un ou plusieurs adjuvants, charges, protéines et catalyseur masqué.

18. Utilisation de la composition adhésive selon l'une quelconque des revendications 1 à 16, pour le collage de matériau humide dont la teneur en humidité est comprise entre 15 et 200% .

19. Utilisation selon la revendication précédente, **caractérisée en ce que** ledit matériau humide est du bois vert.

20. Colle pour matériau humide comprenant une composition adhésive selon l'une des revendications 1 à 16 et un ou plusieurs adjuvants.

21. Colle selon la revendication 20, **caractérisée en ce que** le matériau humide est du bois vert.

22. Article comprenant des pièces de matériau assemblées entre elles à l'état humide par collage, à l'aide de la composition adhésive selon l'une quelconque des revendications 1 à 16, ou de la colle selon l'une quelconque des revendications 20 ou 21.

23. Article selon la revendication 22, **caractérisée en ce que** le matériau humide est du bois vert.

## Claims

1. Adhesive composition for damp material, **characterised in that** it comprises:
a) a compound (A) having at least two isocyanate functions;
b) a compound (B) capable of reacting with the water of the material so as to liberate groups that react with the isocyanate functions of the compound (A);
c) an amphiphilic compound (C) having four alcohol functions and of the ethylene oxide/ propylene oxide copolymer type.

2. Composition according to claim 1, **characterised in that** compound (A) comprises at least two isocyanate functions, preferably two isocyanate functions, and a linear, branched or cyclic, saturated or partially or totally unsaturated, C₁-C₁₅ hydrocarbon skeleton.

3. Composition according to claim 1 or claim 2, **characterised in that** the compound (B) is capable of liberating at least two groups that react with the isocyanate functions of compound (A), in the presence of the molecules of water contained in the damp material.

4. Composition according to claim 3, **characterised in that** said reactive groups liberated by the compound (B) are selected from among the hydroxyl and amine groups.

5. Composition according to claim 3 or claim 4, **characterised in that** compound (B) comprises at least one 4-, 5-, 6- or 7-membered cyclic radical.

6. Composition according to any one of the preceding claims, **characterised in that** the compound (B) comprises at least one oxazolidine motif of formula (I): 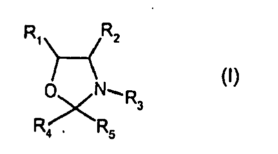 wherein
R₁, R₂, R₃, R₄ and R₅, which may be identical or different, are selected independently of one another from among the hydrogen atom and a linear, branched or cyclic, saturated or partially or totally unsaturated carbon radical comprising 1-10 carbon atoms and optionally one or more hetero- atoms or hetero groups as hereinbefore defined, said hydrocarbon radical optionally also being substituted by one or more chemical entities which are non-reactive with the other components of the adhesive composition or by one or more structures of formula (I).

7. Composition according to claim 6, **characterised in that** compound (B) comprises at least one oxazolidine motif of formula (I) wherein R₁ and R₂ each represent hydrogen.

8. Composition according to any one of claims 1 to 5, **characterised in that** compound (B) comprises at least one orthoester function of formula (II): 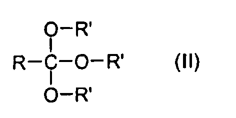 wherein
R denotes a hydrogen atom or a radical R'; the radical R' is a radical selected from among a linear, branched or cyclic, saturated or partially or totally unsaturated carbon radical comprising 1 to 10 carbon atoms and optionally one or more hetero-atoms or hetero groups as hereinbefore defined, this carbon radical optionally also being substituted by one or more chemical entities which are non-reactive with the other components of the adhesive composition or by one or more structures of formula (II).

9. Composition according to claim 8, **characterised in that** compound (B) comprises at least two orthoester groups, preferably at least three orthoester groups, and better still at least four orthoester groups of formula (II) and R denotes hydrogen.

10. Composition according to one of the preceding claims, **characterised in that** compound (C) has a molecular weight of more than 500 g.mol⁻¹, preferably more than 1000 g.mol⁻¹, advantageously more than 2000 g.mol⁻¹.

11. Composition according to one of the preceding claims, **characterised in that** compound (C) corresponds to the following formula (III): 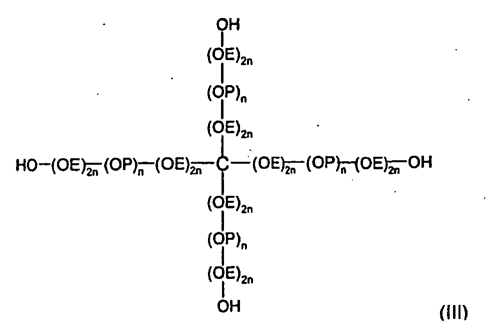 wherein OE represents an ethylene oxide unit (-O-CH₂-CH₂-) and OP represents a propylene oxide unit (-O-CH₂-CH₂-CH₂) and n represents an integer between 1 and 100.

12. Composition according to any one of the preceding claims, **characterised in that** the ratio of isocyanate functions to alcohol functions of the composition is between 1 and 10, preferably between 1.1 and 6, advantageously between 1.5 and 5, approximately between 2 and 3.

13. Composition according to any one of the preceding claims, **characterised in that** it comprises:
a) a compound (A) having at least two isocyanate functions;
b) a compound (B) having at least one oxazolidine motif of formula (I): 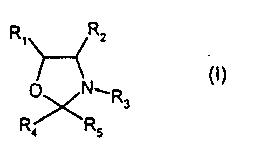 wherein
R₁, R₂, R₃, R₄ and R₅, which may be identical or different, are selected independently of one another from among the hydrogen atom and a linear, branched or cyclic, saturated or partially or totally unsaturated carbon radical comprising 1 to 10 carbon atoms and optionally one or more hetero-atoms or hetero groups as hereinbefore defined, the hydrocarbon radical optionally also being substituted by one or more chemical entities which are non-reactive with the other components of the adhesive composition or by one or more structures of formula (I);
and
c) a compound (C) corresponding to the following formula (III): 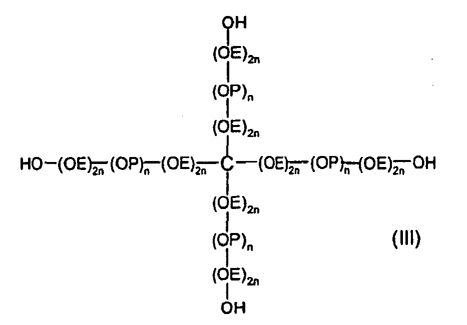
wherein OE represents an ethylene oxide unit (-O-CH₂-CH₂-) and OP represents a propylene oxide unit (-O-CH₂-CH₂-CH₂) and n represents an integer between 1 and 100;
the ratio of isocyanate functions to alcohol functions in the composition being between 1 and 10, preferably between 1.1 and 6, advantageously between 1.5 and 5, approximately between 2 and 3.

14. Composition according to any one of claims 1 to 12, **characterised in that** it comprises:
a) a compound (A) having at least two isocyanate functions;
b) a compound (B) having at least one orthoester function of formula (II-A1): 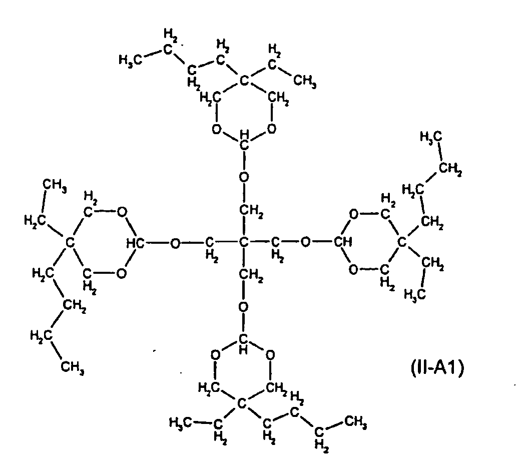
c) a compound (C) corresponding to the following formula (III): 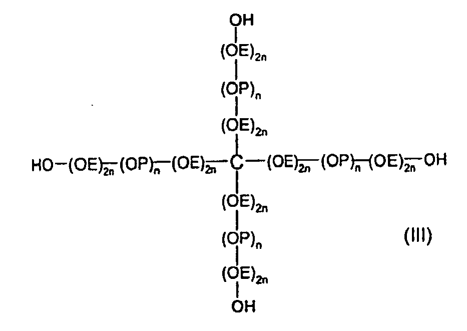
wherein OE represents an ethylene oxide unit (-O-CH₂-CH₂-) and OP represents a propylene oxide unit (-O-CH₂-CH₂-CH₂) and n represents an integer between 1 and 100;
the ratio of isocyanate functions to alcohol functions in the composition being between 1 and 10, preferably between 1.1 and 6, advantageously between 1.5 and 5, approximately between 2 and 3.

15. Composition according to any one of the preceding claims, **characterised in that** it further contains a chain lengthening agent.

16. Composition according to any one of the preceding claims, **characterised in that** it further contains a masked catalyst.

17. Process for preparing an adhesive composition for damp material, according to any one of claims 1 to 16, **characterised in that** it comprises:
a) forming a precondensate between compound (A) and compound (C);
b) mixing compound (B) with the precondensate; and
c) optionally adding one or more adjuvants, fillers, proteins and masked catalyst.

18. Use of the adhesive composition according to any one of claims 1 to 16 for adhering damp material with a moisture content of between 15 and 200%.

19. Use according to the preceding claim, **characterised in that** said damp material is green wood.

20. Adhesive for damp material comprising an adhesive composition according to one of claims 1 to 16 and one or more adjuvants.

21. Adhesive according to claim 20, **characterised in that** the damp material is green wood.

22. Article comprising pieces of material joined together in the damp state by adhesive bonding using the adhesive composition according to any one of claims 1 to 16 or the adhesive according to any one of claims 20 or 21.

23. Article according to claim 22, **characterised in that** the damp material is green wood.

## Patentansprüche

1. Klebstoffzusammensetzung für feuchte Materialien, **dadurch gekennzeichnet, dass** sie umfasst:
a) eine Verbindung (A), die mindestens zwei Isocyanatfunktionen enthält;
b) eine Verbindung (B), die mit dem Wasser aus dem Material reagieren kann, um mit den Isocyanatfunktionen aus der Verbindung (A) reaktive Gruppen freizusetzen;
c) eine amphiphile Verbindung (C), die vier funktionelle Alkohole enthält und von der Art eines Ethylenoxid/Propylenoxid-Copolymers ist.

2. Zusammensetzung nach Anspruch 1, **dadurch gekennzeichnet, dass** die Verbindung (A) mindestens zwei Isocyanatfunktionen, vorzugsweise 2 Isocyanatfunktionen, und ein lineares, verzweigtes oder zyklisches, gesättigtes oder teilweise oder vollständig ungesättigtes C₁-C₁₅-Kohlenwasserstoffgerüst aufweist.

3. Zusammensetzung nach Anspruch 1 oder 2, **dadurch gekennzeichnet, dass** die Verbindung (B) in Gegenwart der im feuchten Material enthaltenen Wassermoleküle mit den Isocyanatfunktionen der Verbindung (A) mindestens zwei reaktive Gruppen freisetzen kann.

4. Zusammensetzung nach Anspruch 3, **dadurch gekennzeichnet, dass** die durch die Verbindung (B) freigesetzten, reaktiven Gruppen ausgewählt sind aus Hydroxyl- und Amingruppen.

5. Zusammensetzung nach Anspruch 3 oder 4, **dadurch gekennzeichnet, dass** die Verbindung (B) mindestens einen 4-, 5-, 6- oder 7-gliedrigen, zyklischen Rest enthält.

6. Zusammensetzung nach einem der vorhergehenden Ansprüche, **dadurch gekennzeichnet, dass** die Verbindung (B) mindestens ein Oxazolidin-Motiv mit der Formel (I): 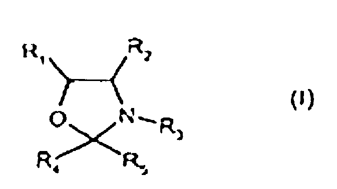 enthält, worin:
R₁, R₂, R₃, R₄ und R₅, gleich oder verschieden sind und unabhängig voneinander ausgewählt sind aus einem Wasserstoffatom und einem linearen, verzweigten oder zyklischen, gesättigten oder teilweise oder vollständig ungesättigten Kohlenstoffrest und 1 bis 10 Kohlenstoffatome und gegebenenfalls ein oder mehrere Heteroatome oder Heterogruppen, wie sie oben definiert sind, enthalten, wobei der Kohlenwasserstoffrest zudem mit einer oder mehreren gegenüber den anderen Bestandteilen der Klebstoffzusammensetzung nicht-reaktiven, chemischen Einheiten oder mit einer oder mehreren Strukturen mit der Formel (I) substituiert sein kann.

7. Zusammensetzung nach Anspruch 6, **dadurch gekennzeichnet, dass** die Verbindung (B) mindestens ein Oxazolidin-Motiv mit der Formel (I) enthält, worin R₁ und R₂ jeweils Wasserstoff sind.

8. Zusammensetzung nach einem der Ansprüche 1 bis 5, **dadurch gekennzeichnet, dass** die Verbindung (B) mindestens eine ortho-Esterfunktion mit der Formel (II): 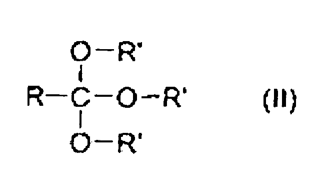 enthält, worin:
R ein Wasserstoffatom oder ein Rest R' ist; wobei der Rest R' ein Rest ist, der ausgewählt ist aus einem linearen, verzweigten oder zyklischen, gesättigten oder teilweise oder vollständig ungesättigten Kohlenstoffrest und 1 bis 10 Kohlenstoffatome und gegebenenfalls ein oder mehrere Heteroatome oder Heterogruppen, wie sie oben definiert sind, enthält, wobei der Kohlenstoffrest zudem mit einer oder mehreren gegenüber den anderen Bestandteilen der Klebstoffzusammensetzung nicht-reaktiven, chemischen Einheiten oder mit einer oder mehreren Strukturen der Formel (II) substituiert sein kann.

9. Zusammensatzung nach Anspruch 8, **dadurch gekennzeichnet, dass** die Verbindung (B) mindestens zwei ortho-Estergruppen, vorzugsweise mindestens drei ortho-Estergruppen und besonders bevorzugt mindestens vier ortho-Estergruppen mit der Formel (II) enthält und R Wasserstoff ist.

10. Zusammensetzung nach einem der vorhergehenden Ansprüche, **dadurch gekennzeichnet, dass** die Verbindung (C) ein Molekulargewicht von mehr als 500 g/mol, bevorzugt von mehr als 1000 g/mol und besonders bevorzugt von mehr als 2000 g/mol besitzt.

11. Zusammensetzung nach einem der vorhergehenden Ansprüche, **dadurch gekennzeichnet, dass** die Verbindung (C) folgende Formel (III) hat: 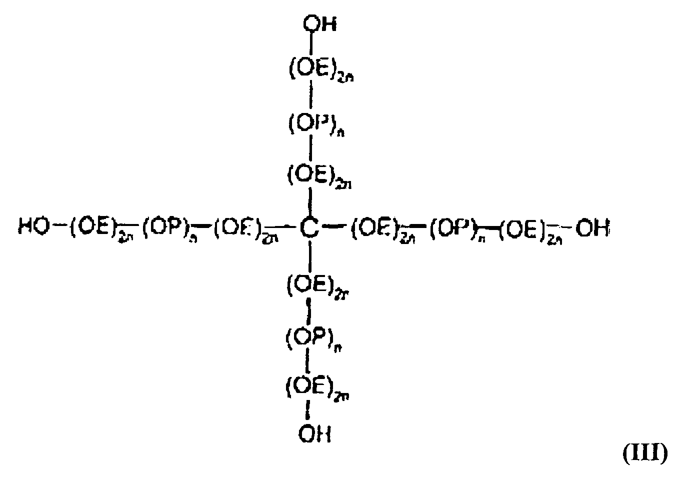 worin OE eine Ethylenoxid-Einheit (-O-CH₂-CH₂-) und OP eine Propylenoxid-Einheit (-O-CH₂-CH₂-CH₂) und n eine ganze Zahl zwischen 1 und 100 ist.

12. Zusammensetzung nach irgendeinem der vorhergehenden Ansprüche, **dadurch gekennzeichnet, dass** das Verhältnis von Isocyanatfunktionen zu Alkoholfunktionen in der Zusammensetzung zwischen 1 und 10, vorzugsweise zwischen 1,1 und 6, vorteilhafter Weise zwischen 1,5 und 5, zwischen etwa 2 und 3, liegt.

13. Zusammensetzung nach einem der vorhergehenden Ansprüche, **dadurch gekennzeichnet, dass** sie umfasst:
a) eine Verbindung (A), die mindestens zwei Isocyanatfunktionen enthält,
b) eine Verbindung (B), die mindestens ein Oxazolidin-Motiv mit der Formel (I): 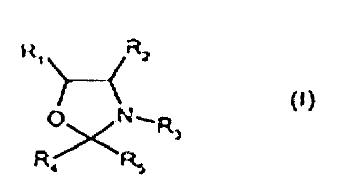 enthält, worin:
R₁, R₂, R₃, R₄ und R₅ gleich oder verschieden sind und unabhängig voneinander ausgewählt sind aus einem Wasserstoffatom und einem linearen, verzweigten oder zyklischen, gesättigten oder teilweise oder vollständig ungesättigten Kohlenstoffrest und 1 bis 10 Kohlenstoffatome und gegebenenfalls ein oder mehrere Heteroatome oder Heterogruppen, wie sie oben definiert sind, enthalten, wobei der Kohlenwasserstoffrest zudem mit einer oder mehreren gegenüber den anderen Bestandteilen der Klebstoffzusammensetzung nicht-reaktiven, chemischen Einheiten oder mit einer oder mehreren Strukturen der Formel (I) substituiert sein kann; und
c) eine Verbindung (C) mit der folgenden Formel (III): 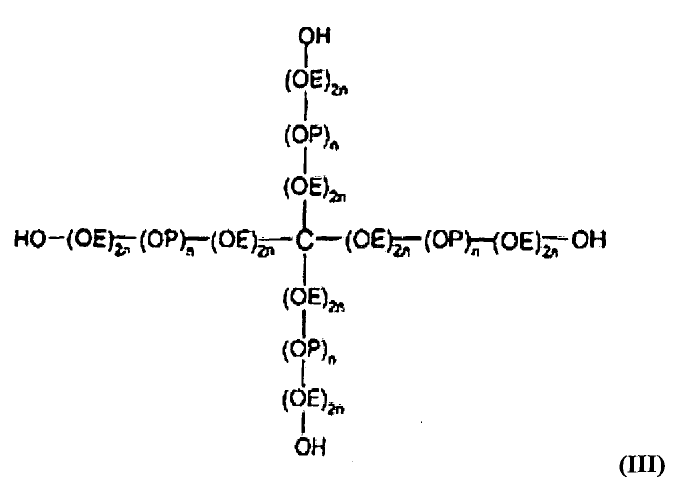
worin OE eine Ethylenoxid-Einheit (-O-CH₂-CH₂-) und OP eine Propylenoxid-Einheit (-O-CH₂-CH₂-CH₂) und n eine ganze Zahl zwischen 1 und 100 ist;
wobei das Verhältnis von Isocyanatfunktionen zu Alkoholfunktionen in der Zusammensetzung zwischen 1 und 10, vorzugsweise zwischen 1,1 und 6, vorteilhafter Weise zwischen 1,5 und 5, zwischen etwa 2 und 3, liegt.

14. Zusammensetzung nach irgendeinem der Ansprüche 1 bis 12, **dadurch gekennzeichnet, dass** sie umfasst:
a) eine Verbindung (A), die mindestens zwei Isocyanatfunktionen enthält;
b) eine Verbindung (B), die mindestens eine ortho-Esterfunktion der Formel (II-A1) : 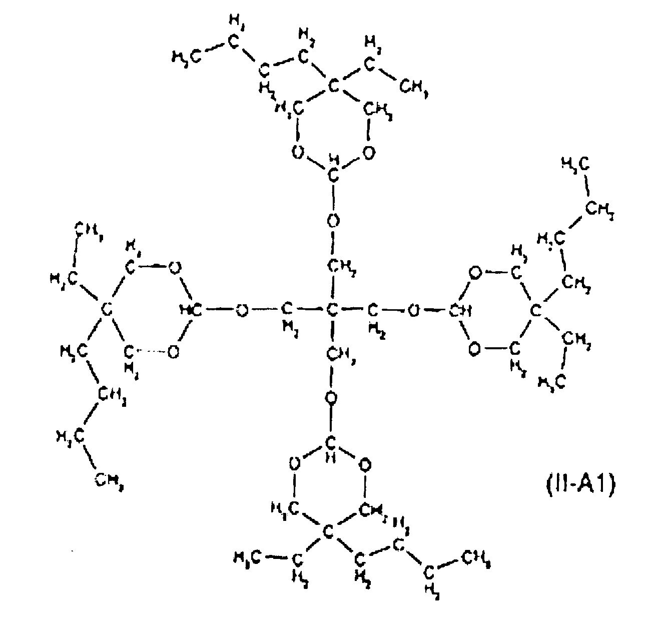 enthält; und
c) eine Verbindung mit der folgenden Formel (III): 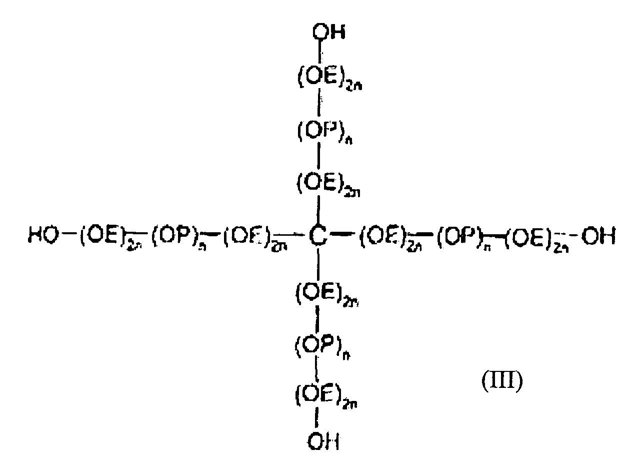
worin OE eine Ethylenoxid-Einheit (O-CH₂-CH₂-) und OP eine Propylenoxid-Einheit (O-CH₂-CH₂-CH₂) und n eine ganze Zahl zwischen 1 und 100 ist;
wobei das Verhältnis zwischen Isocyanatfunktionen und Alkoholfunktionen in der Zusammensetzung zwischen 1 und 10, vorzugsweise zwischen 1,1 und 6, vorteilhafter Weise zwischen 1,5 und 5, zwischen etwa 2 und 3, liegt.

15. Zusammensetzung nach einem der vorhergehenden Ansprüche, **dadurch gekennzeichnet, dass** sie zudem ein Kettenverlängerungsmittel enthält.

16. Zusammensetzung nach einem der vorhergehenden Ansprüche, **dadurch gekennzeichnet, dass** sie zudem einen maskierten Katalysator enthält.

17. Verfahren zur Herstellung einer Klebstoffzusammensetzung für feuchte Materialien gemäß einem der Ansprüche 1 bis 16, **dadurch gekennzeichnet, dass** es
a) die Bildung eines Vorkondensats zwischen der Verbindung (A) und der Verbindung (C);
b) das Vermischen der Verbindung (B) mit dem Vorkondensat; und
c) gegebenenfalls die Zugabe von einem oder mehreren Hilfsmitteln, Füllstoffen, Proteinen und maskierten Katalysatoren
umfasst.

18. Verwendung der Klebstoffzusammensetzung gemäß einem der Ansprüche 1 bis 16 zum Kleben feuchter Materialien, deren Feuchtegehalt zwischen 15 und 200 % liegt.

19. Verwendung nach dem vorgehenden Anspruch, **dadurch gekennzeichnet, dass** das feuchte Material grünes Holz ist.

20. Klebstoff für feuchte Materialien, umfassend eine Klebstoffzusammensetzung gemäß irgendeinem der Ansprüche 1 bis 16 und ein oder mehrere Hilfsstoffe.

21. Klebstoff nach Anspruch 20, **dadurch gekennzeichnet, dass** das feuchte Material grünes Holz ist.

22. Artikel, umfassend Teile aus Material, die im feuchten Zustand durch Verkleben mit Hilfe der Klebstoffzusammensetzung gemäß einem der Ansprüche 1 bis 16 oder des Klebstoffes gemäß einem der Ansprüche 20 oder 21 zusammengesetzt wurden.

23. Artikel nach Anspruch 22, **dadurch gekennzeichnet, dass** das feuchte Material grünes Holz ist.
